# FASCICULE DE BREVET EUROPEEN

(11) **EP 2 492 003 B1**
(45) Date de publication et mention de la délivrance du brevet: **10.07.2013**
(21) Numéro de dépôt: 12156917.2
(22) Date de dépôt: 24.02.2012
(51) Int. Cl.: B01F 3/04, B01F 7/22, C02F 3/16

(54) **Appareil de traitement mécanique d'une composition liquide et procédé de traitement mécanique d'une telle composition liquide**
Gerät zur mechanischen Behandlung einer flüssigen Zusammensetzung, und mechanisches Behandlungsverfahren einer solchen flüssigen Zusammensetzung
Device for mechanical treatment of a liquid composition and method for mechanical treatment of such a liquid composition

(30) Priorité: 25.02.2011 FR 1100569
(43) Date de publication de la demande: 29.08.2012
(73) Titulaire: Grasa, Jean-Pierre, 31400 Toulouse (FR)
(72) Inventeur: Grasa, Jean-Pierre, 31400 Toulouse (FR)
(74) Mandataire: Cabinet BARRE LAFORGUE & associés

(56) Documents cités:
- EP-A1- 0 366 644
- FR-A1- 2 609 459
- JP-A- 2003 236 579

## Description

L'invention concerne un appareil de traitement mécanique d'une composition liquide contenue dans un bassin, en particulier d'eaux usées traitées dans des stations d'épuration.

L'invention concerne également un procédé de traitement mécanique d'une telle composition liquide.

On connait déjà de FR 2609459 un appareil comprenant un aérateur et un mélangeur entraînés en rotation par un même arbre moteur, l'aérateur étant disposé à la surface du liquide et le mélangeur étant disposé à un niveau inférieur, dans le liquide. Un tel appareil est destiné à être utilisé pendant les périodes de traitement biologique aérobie. Il permet d'aérer non seulement le liquide situé proche de la surface mais également le liquide situé au fond du bassin, grâce au mélangeur disposé en dessous de l'aérateur.

Des dispositifs semblables sont encore connus de JP 2003 236 576 et de EP-A-0366 644.

Cependant, un appareil selon FR 2609459 ne peut pas être utilisé pendant les périodes de traitement anaérobie, c'est-à-dire au cours desquelles seul un mélange du liquide doit être effectué, sans aération.

L'invention vise donc à proposer un appareil de traitement mécanique d'une composition liquide qui permette, outre de pouvoir effectuer un traitement efficace d'aération et de mélange d'une composition liquide, de pouvoir effectuer un traitement efficace de mélange sans aération d'une composition liquide.

L'invention vise en particulier à proposer un appareil de traitement mécanique d'une composition liquide permettant un mélange efficace de l'ensemble d'un volume de composition liquide à traiter contenue dans un bassin, sans aération, c'est-à-dire un traitement de type anaérobie.

L'invention vise également à proposer un appareil de traitement mécanique d'une composition liquide dont la fabrication, l'installation et la mise en oeuvre est compatible avec les contraintes d'une exploitation industrielle notamment en termes de coût.

Pour ce faire, l'invention concerne un appareil conforme à la revendication 1.

Un tel appareil permet donc, dans un premier sens de rotation de l'arbre moteur, de réaliser une aération et un mélange d'une composition liquide à traiter, l'aérateur centrifuge de surface et le mélangeur de fond agissant tous les deux sur la composition liquide, mais également, dans un second sens de rotation de l'arbre moteur, de réaliser un mélange efficace d'une composition liquide à traiter sans aération, l'aérateur centrifuge de surface étant alors désactivé. Ainsi, un même appareil de traitement mécanique permet de réaliser, alternativement et selon les besoins, une étape de traitement biologique de type aérobie et une étape de traitement biologique de type anaérobie sans nécessiter de dispositif de levage et/ou d'abaissement de l'appareil. Ainsi, la position de l'appareil, c'est-à-dire son niveau d'immersion dans la composition liquide, peut rester inchangée dans le premier et le second sens de rotation.

Ainsi, dans un appareil selon l'invention, dans le second sens de rotation, l'aérateur est « désactivé » par le fait qu'il n'est pas entraîné en rotation par l'arbre moteur, et donc sans nécessiter un déplacement de l'aérateur par rapport au niveau de la composition liquide.

Autrement dit, l'invention concerne un appareil de traitement mécanique d'une composition liquide contenue dans un bassin comprenant :
- un bâti portant un moteur hors de la composition liquide,
- un arbre moteur entraîné en rotation par ledit moteur et plongeant dans la composition liquide,
- un aérateur centrifuge de surface, entraîné en rotation par ledit arbre moteur dans un premier sens de rotation dudit arbre moteur et adapté pour présenter une efficacité maximale d'entraînement de la composition liquide dans ledit premier sens de rotation dudit arbre moteur,
- un mélangeur de fond, entraîné en rotation par ledit arbre moteur, dans lequel :
- le moteur peut être entrainé dans un second sens de rotation, inverse dudit premier sens de rotation,
- l'appareil comprend une unité de commande dudit moteur adaptée pour pouvoir commander l'entraînement de l'arbre moteur dans le second sens de rotation,
**caractérisé en ce que** l'appareil comprend un dispositif d'activation/désactivation de l'aérateur, adapté pour désactiver l'aérateur afin de le rendre inopérant sur la composition liquide dans le second sens de rotation, l'aérateur étant désactivé de façon à ne pas être entraîné en rotation par l'arbre moteur.

Le dispositif d'activation/désactivation de l'aérateur peut comprendre tout dispositif permettant l'entraînement en rotation par l'arbre moteur de l'aérateur dans le premier sens de rotation, et la désolidarisation en entraînement en rotation par l'arbre moteur de l'aérateur dans le second sens de rotation. En particulier, avantageusement et selon l'invention, un dispositif de transmission rotative unidirectionnelle, dit roue libre, est disposé entre l'arbre moteur et l'aérateur, et est adapté pour que l'aérateur soit entraîné en rotation par l'arbre moteur uniquement dans le premier sens de rotation de l'arbre moteur. De cette façon, la position de l'aérateur par rapport au niveau de la surface de la composition liquide reste le même dans le premier comme dans le second sens de rotation de l'arbre moteur.

Avantageusement et selon l'invention, un appareil selon l'invention comprend un dispositif de transmission rotative unidirectionnelle, dit roue libre, adapté pour permettre l'entraînement en rotation par l'arbre moteur de l'aérateur dans le premier sens de rotation, et pour désaccoupler l'arbre moteur et l'aérateur dans le second sens de rotation de l'arbre moteur pour lequel l'aérateur n'est pas entraîné en rotation par l'arbre moteur.

Ainsi, avantageusement et selon l'invention, la position de l'aérateur par rapport au niveau de la composition liquide (autrement dit, par rapport à la surface de la composition liquide) est identique dans le premier sens de rotation et dans le second sens de rotation.

En outre, avantageusement et selon l'invention, l'aérateur présente une forme générale de cône sur lequel sont fixées des pales s'étendant à l'oblique du sommet à la base dudit cône. Un tel aérateur présente une efficacité d'aération maximale dans un sens de rotation particulier et n'est donc destiné qu'à être utilisé en tant qu'aérateur dans ce sens de rotation particulier, c'est-à-dire dans lequel il permet de projeter la composition liquide vers l'extérieur de façon à maximiser le contact de la composition liquide avec l'air.

D'autre part, avantageusement et selon l'invention, le mélangeur est formé d'une hélice axiale. Une telle hélice axiale peut présenter toute forme et comporter un nombre de pale(s) adapté à une mise en mouvement de la composition liquide permettant un mélange efficace. Une telle hélice axiale peut par exemple comporter deux à dix pales, par exemple quatre pales. En particulier, une telle hélice axiale peut par exemple présenter les mêmes propriétés de mise en mouvement de la composition liquide dans les deux sens de rotation possibles de façon à permettre une même efficacité de mélange en cas de traitement de type aérobie ou anaérobie.

Avantageusement et selon l'invention, un appareil selon l'invention comprend en outre un conduit de guidage formé d'un tronçon cylindrique de révolution et disposé, entre le mélangeur et l'aérateur, de façon à ce que l'axe de l'arbre moteur soit confondu avec l'axe de révolution du tronçon cylindrique. Un tel conduit de guidage permet d'améliorer l'efficacité d'un appareil selon l'invention en canalisant un flux ascendant de composition liquide formé au cours d'une étape d'aération et de mélange comme au cours d'une étape de mélange sans aération, en canalisant un flux descendant de composition liquide. Un tel conduit de guidage peut présenter toute forme propre à améliorer l'efficacité du traitement mécanique de la composition liquide. En particulier, un tel conduit de guidage peut par exemple présenter une forme cylindrique de révolution évasée à ses extrémités.

Avantageusement et selon l'invention, l'arbre moteur est disposé verticalement dans le bassin. Ainsi, avantageusement et selon l'invention, l'axe de rotation de l'aérateur et l'axe de rotation du mélangeur sont parallèles à l'arbre moteur.

Avantageusement et selon l'invention, un appareil selon l'invention comprend un bâti permettant de maintenir le moteur hors de la composition liquide et de supporter l'arbre moteur plongeant dans la composition liquide. Avantageusement et selon l'invention, le bâti comprend des piliers reposant au fond du bassin. Le bâti peut par exemple comprendre une plateforme sur laquelle repose le moteur. Le bâti peut également comprendre une plateforme ne reposant pas au fond du bassin mais sur les bords supérieurs du bassin, hors de la composition liquide. Il peut par exemple s'agir d'un radier fixé sur les bords du bassin.

L'invention s'étend également à un procédé de traitement mécanique d'une composition liquide contenue dans un bassin, dans lequel :
- un moteur est porté hors de la composition liquide par un bâti,
- un arbre moteur est entraîné en rotation par ledit moteur et est plongé dans la composition liquide,
- un aérateur centrifuge de surface est entraîné en rotation par ledit arbre moteur dans un premier sens de rotation, ledit aérateur étant adapté pour présenter une efficacité maximale d'entraînement de la composition liquide dans ledit premier sens de rotation dudit arbre moteur,
- un mélangeur de fond est entraîné en rotation par ledit arbre moteur,
- on commande, via une unité de commande dudit moteur, l'entraînement de l'arbre moteur dans un second sens de rotation, inverse dudit premier sens de rotation,
**caractérisé en ce que**, dans le second sens de rotation de l'arbre moteur, l'aérateur est désactivé par un dispositif d'activation/désactivation de l'aérateur de façon à ce que l'aérateur ne soit pas entraîné en rotation par l'arbre moteur, afin de le rendre inopérant sur la composition liquide dans le second sens de rotation.

Un procédé de traitement mécanique d'une composition liquide selon l'invention permet donc de réaliser, alternativement, d'une part, une aération et un mélange d'une composition liquide à traiter, l'aérateur centrifuge de surface et le mélangeur de fond étant tous deux entraînés dans un premier sens de rotation, et d'autre part, un mélange sans aération d'une composition liquide à traiter, le mélangeur de fond étant alors entraîné dans un second sens de rotation de l'arbre moteur et l'aérateur centrifuge de surface étant désactivé de façon à ne pas être entraîné en rotation par l'arbre moteur. De cette façon, il n'est pas nécessaire de modifier le niveau d'immersion de l'aérateur ou de tout l'appareil pour passer d'une étape de traitement biologique de type aérobie à une étape de traitement biologique de type anaérobie, et inversement, la position de l'aérateur par rapport au niveau de la composition liquide restant identique dans le premier et le second sens de rotation.

Avantageusement et selon l'invention, dans le premier sens de rotation, l'aérateur et le mélangeur sont entrainés en rotation par l'arbre et permettent la formation d'un flux ascendant de composition liquide du mélangeur vers l'aérateur. Dans le premier sens de rotation, le mélangeur entraîne la formation d'un flux ascendant de la composition liquide, partant du fond du bassin et dirigé vers la surface de la composition liquide, au niveau de l'aérateur qui projette alors un flux de composition liquide en dehors de la composition liquide.

Avantageusement et selon l'invention, dans le second sens de rotation, l'aérateur est rendu inopérant et le mélangeur est entrainé en rotation par ledit arbre moteur, le mélangeur permettant la formation d'un flux descendant de composition liquide de la surface du liquide vers le mélangeur. Dans le second sens de rotation, le mélangeur entraîne la formation d'un flux descendant de la composition liquide, allant de la surface du liquide vers le fond du bassin.

L'invention concerne aussi un appareil et un procédé caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentiel donné à titre d'exemple non limitatif, et qui se réfère aux figures annexées dans lesquelles :
- la figure 1 est une représentation schématique d'un appareil selon l'invention au cours d'une phase d'aération,
- la figure 2 est une représentation schématique d'un appareil selon l'invention au cours d'une phase de mélange,
- la figure 3 est une représentation schématique d'un appareil selon l'invention au cours d'une phase d'aération,
- la figure 4 est une représentation schématique d'un appareil selon l'invention au cours d'une phase de mélange,
- la figure 5a est une représentation schématique d'une vue latérale d'un aérateur utilisé dans un appareil selon l'invention,
- la figure 5b est une représentation schématique d'une vue de dessous d'un aérateur utilisé dans un appareil selon l'invention,
- la figure 6a est une représentation schématique d'une vue latérale d'un mélangeur utilisé dans un appareil selon l'invention,
- la figure 6b est une représentation schématique d'une coupe transversale d'un mélangeur utilisé dans un appareil selon l'invention.

Un appareil de traitement mécanique d'une composition liquide contenue dans un bassin selon l'invention comprend un moteur 2 électrique porté par un bâti de façon à être maintenu en dehors de la composition liquide à tout moment. Le moteur 2 électrique entraîne en rotation un arbre 6 moteur auquel sont accouplés un aérateur 4 centrifuge de surface et un mélangeur 8 de fond. L'arbre 6 moteur est disposé verticalement dans la composition liquide dans laquelle il est plongé. L'arbre 6 moteur est disposé de façon à ce que le mélangeur 8 de fond soit immergé dans la composition liquide et dirigé vers le fond du bassin, et à ce que l'aérateur soit situé au-dessus du mélangeur 8 de fond, au niveau d'une surface 1 formée par la composition liquide avec l'air extérieur.

Le moteur 2 électrique est adapté pour pouvoir entraîner en rotation l'arbre 6 moteur dans les deux sens de rotation possibles, un premier sens de rotation de l'arbre 6 moteur correspondant à une étape d'aération et de mélange de la composition liquide et un second sens de rotation de l'arbre 6 moteur correspondant à une étape de mélange sans aération de la composition liquide.

Le bâti de l'appareil comprend une plateforme 3, sur laquelle repose le moteur 2, et des piliers 18 (par exemple trois piliers) reposant au fond du bassin. Les piliers 18 sont également éventuellement fixés au fond du bassin pour une plus grande stabilité. Les piliers 18 sont formés de tubes cylindriques de révolution disposés verticalement dans le bassin et fixés à la plateforme 3. Le bâti de l'appareil peut également, alternativement, comprendre un radier reposant sur les bords supérieurs du bassin, hors de la composition liquide.

La distance sur l'arbre moteur entre l'aérateur et le mélangeur peut notamment être choisie en fonction des dimensions du bassin contenant la composition à traiter ainsi que de la nature de la composition liquide à traiter.

L'appareil est disposé de façon à ce que le mélangeur 8 de fond ne soit pas en contact avec le fond du bassin dans lequel il est installé, il peut par exemple être disposé de façon à ce que la distance entre le mélangeur 8 et le fond du bassin soit comprise entre 0,3 m et 6 m.

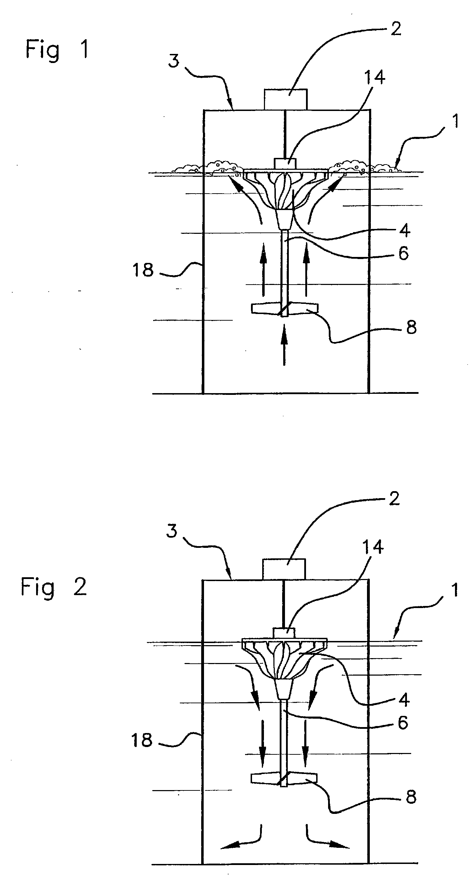

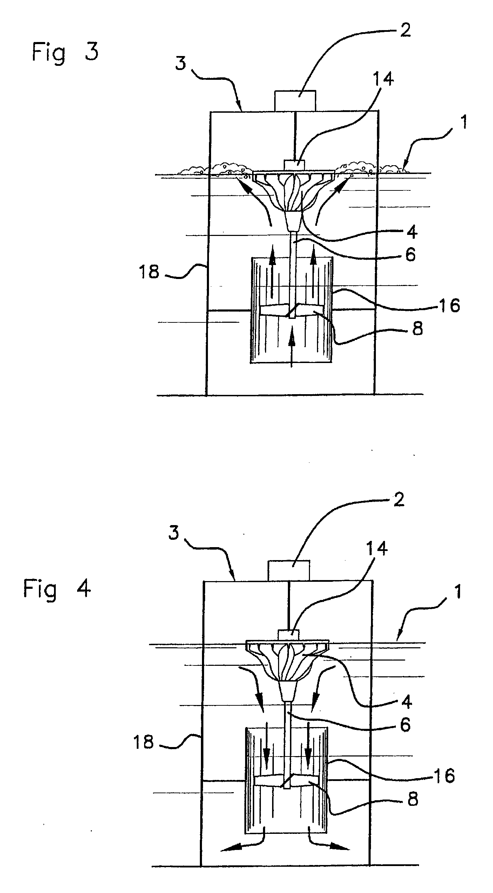

Au cours d'une étape d'aération et de mélange (figures 1 et 3), l'aérateur 4, disposé au niveau de la surface de la composition liquide, et le mélangeur 8 sont entraînés en rotation par l'arbre 6 moteur dans le premier sens de rotation. L'action du mélangeur 8 entraîne la formation d'un flux ascendant de la composition liquide, c'est-à-dire partant du fond du bassin, sous le mélangeur 8, et dirigé vers la surface de la composition liquide, au niveau de l'aérateur 4. Au niveau de l'aérateur 4, le flux de composition liquide est projeté en dehors de la composition liquide, dans l'air extérieur. Une telle phase d'aération permet une aération efficace de l'ensemble du volume de la composition liquide contenue dans le bassin dans lequel est disposé un appareil selon l'invention.

Au cours d'une étape d'aération et de mélange, l'aérateur 4 et le mélangeur 8 sont entraînés en rotation par l'arbre 6 moteur dans le premier sens de rotation à une vitesse de rotation de l'arbre moteur pouvant par exemple être comprise entre 10 tours/min et 1500 tours/min, et plus particulièrement entre 30 tours/min et 200 tours/min.

Au cours d'une étape de mélange sans aération (figures 2 et 4), l'aérateur 4 est désactivé, via un dispositif d'activation/désactivation de l'aérateur, et seul le mélangeur 8 agit sur la composition liquide. Le mélangeur 8 est entraîné en rotation par l'arbre 6 moteur dans le second sens de rotation, entraînant la formation d'un flux descendant de la composition liquide, c'est-à-dire allant de la surface du liquide vers le mélangeur 8 et le fond du bassin. La rotation du mélangeur 8 dans le second sens de rotation entraîne la formation d'un vortex à la surface de la composition liquide et permet d'entraîner vers le fond du bassin les mousses et autres dépôts ayant pu se former et s'accumuler à la surface de la composition liquide au cours d'une éventuelle étape d'aération et de mélange antérieure. Une telle étape de mélange sans aération permet un mélange anaérobie et une homogénéisation de l'ensemble du volume de la composition liquide contenue dans le bassin dans lequel est disposé un appareil selon l'invention.

Au cours d'une étape de mélange sans aération, le mélangeur 8 est entraîné en rotation par l'arbre 6 moteur dans le second sens de rotation à une vitesse de rotation de l'arbre moteur pouvant par exemple être comprise entre 10 tours/min et 1500 tours/min, et plus particulièrement entre 30 tours/min et 200 tours/min.

Dans un premier mode de réalisation d'un appareil selon l'invention correspondant aux figures 1 et 2 et dans un deuxième mode de réalisation d'un appareil selon l'invention correspondant aux figures 3 et 4, le dispositif d'activation/désactivation de l'aérateur est constitué d'un dispositif 14 de transmission rotative unidirectionnelle, dit roue libre, disposé entre l'arbre moteur et l'aérateur. Selon ces deux modes de réalisation, dans le second sens de rotation, l'aérateur 4 est désactivé et n'est pas entraîné en rotation par l'arbre 6 moteur.

Dans le deuxième mode de réalisation d'un appareil selon l'invention correspondant aux figures 3 et 4, un appareil selon l'invention comprend en outre un conduit 16 de guidage formé d'un tronçon cylindrique de révolution creux et ouvert à ses deux extrémités (figures 3 et 4). Le conduit 16 de guidage est disposé parallèlement à l'arbre moteur, entre le mélangeur et l'aérateur. Le conduit 16 de guidage est disposé de façon à ce que l'axe de l'arbre moteur soit confondu avec l'axe de révolution du tronçon cylindrique. Le conduit 16 de guidage est fixé à chacun des piliers 18 de l'appareil. Un tel conduit de guidage permet d'améliorer l'efficacité d'un appareil selon l'invention en canalisant le flux de composition liquide formé au cours d'une étape d'aération et de mélange et au cours d'une étape de mélange sans aération. Le conduit 16 de guidage peut également être disposé uniquement à partir du mélangeur 8 et s'étendre alors majoritairement entre le mélangeur et le fond du bassin. La distance entre l'extrémité inférieure du conduit 16 de guidage et le fond du bassin peut par exemple être comprise entre 0,3 m et 3 m, par exemple 0,5 m.

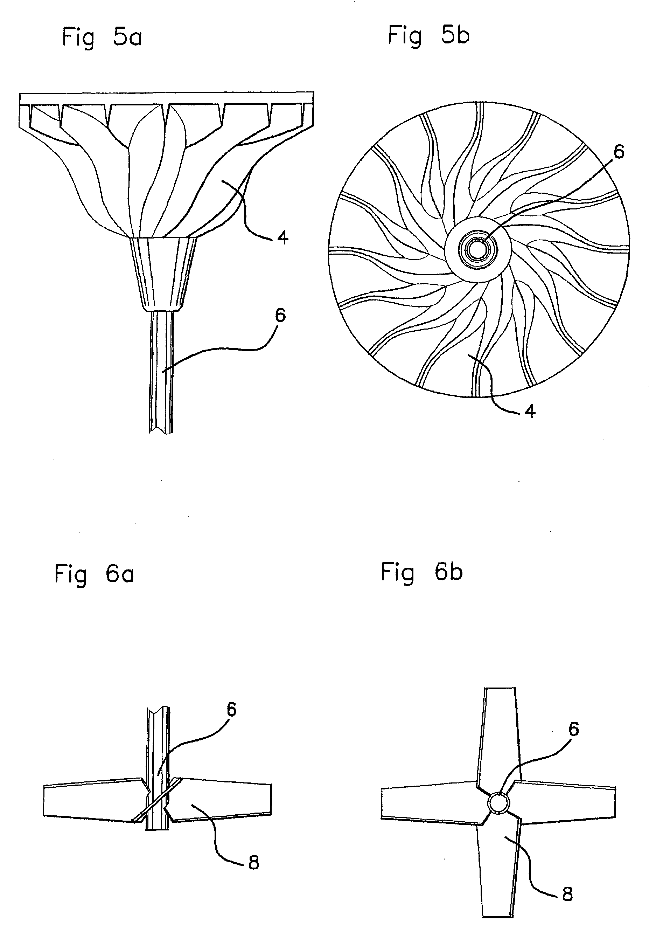

Les figures 5a et 5b représentent respectivement une vue latérale et une vue de dessous de l'aérateur 4. L'aérateur 4 présente une forme générale de cône sur lequel sont fixées des pales centrifuges s'étendant à l'oblique du sommet à la base du cône. Un tel aérateur 4 est uniquement destiné à être utilisé en tant qu'aérateur et ce dans un seul sens de rotation particulier dans lequel il présente une efficacité d'aération maximale.

Les figures 6a et 6b représentent respectivement une vue latérale et une coupe transversale du mélangeur 8. Le mélangeur 8 est formé d'une hélice axiale à quatre pales présentant les mêmes propriétés de mise en mouvement de la composition liquide dans les deux sens de rotation de l'arbre moteur.

L'invention peut faire l'objet de très nombreuses variantes de réalisation. En particulier, un appareil selon l'invention peut être fixé sur un système de flotteur(s), sans nécessiter de bâti reposant au fond du bassin dans lequel il est disposé. En outre, en fonction des dimensions du bassin et du volume de composition liquide à traiter, un seul ou plusieurs appareil(s) selon l'invention peut (peuvent) être disposé(s) dans le même bassin.

## Revendications

1. Appareil de traitement mécanique d'une composition liquide contenue dans un bassin comprenant :
- un bâti portant un moteur (2) hors de la composition liquide,
- un arbre (6) moteur entraîné en rotation par ledit moteur et plongeant dans la composition liquide,
- un aérateur (4) centrifuge de surface, entraîné en rotation par ledit arbre moteur dans un premier sens de rotation dudit arbre moteur et adapté pour présenter une efficacité maximale d'entraînement de la composition liquide dans ledit premier sens de rotation dudit arbre moteur,
- un mélangeur (8) de fond, entraîné en rotation par ledit arbre moteur, dans lequel :
- le moteur (2) peut être entrainé dans un second sens de rotation, inverse dudit premier sens de rotation,
- l'appareil comprend une unité de commande dudit moteur adaptée pour pouvoir commander l'entraînement de l'arbre (6) moteur dans le second sens de rotation,
**caractérisé en ce que** l'appareil comprend un dispositif d'activation/désactivation de l'aérateur, adapté pour, dans le second sens de rotation de l'arbre (6) moteur, désactiver l'aérateur de façon à ce qu'il ne soit pas entraîné en rotation par l'arbre (6) moteur, afin de le rendre inopérant sur la composition liquide dans le second sens de rotation.

2. Appareil selon la revendication 1, **caractérisé en ce que**, l'aérateur (4) présente une forme générale de cône sur lequel sont fixées des pales centrifuges s'étendant à l'oblique du sommet à la base dudit cône.

3. Appareil selon l'une des revendications 1 ou 2, **caractérisé en ce que** la position de l'aérateur par rapport au niveau de la composition liquide est identique dans le premier sens de rotation et dans le second sens de rotation.

4. Appareil selon l'une des revendications 1 à 3, **caractérisé en ce qu'**il comprend un dispositif de transmission rotative unidirectionnelle, dit roue libre, adapté pour permettre l'entrainement en rotation par l'arbre (6) moteur de l'aérateur dans le premier sens de rotation, et pour désaccoupler l'arbre (6) moteur et l'aérateur (4) dans le second sens de rotation de l'arbre moteur pour lequel l'aérateur (4) n'est pas entraîné en rotation par l'arbre moteur.

5. Appareil selon l'une des revendications 1 à 4, **caractérisé en ce que** le mélangeur (8) est formé d'une hélice axiale.

6. Appareil selon l'une des revendications 1 à 5, **caractérisé en ce qu'**il comprend un conduit (16) de guidage formé d'un tronçon cylindrique de révolution et disposé, entre le mélangeur et l'aérateur, de façon à ce que l'axe de l'arbre moteur soit confondu avec l'axe de révolution du tronçon cylindrique.

7. Appareil selon l'une des revendications 1 à 6, **caractérisé en ce que** l'arbre moteur est disposé verticalement.

8. Appareil selon l'une des revendications 1 à 7, **caractérisé en ce que** l'axe de rotation de l'aérateur (4) et l'axe de rotation du mélangeur (8) sont parallèles à l'arbre moteur.

9. Appareil selon l'une des revendications 1 à 8, **caractérisé en ce que** le bâti comprend des piliers (18) reposant au fond du bassin.

10. Procédé de traitement mécanique d'une composition liquide contenue dans un bassin, dans lequel :
- un moteur (2) est porté hors de la composition liquide par un bâti,
- un arbre (6) moteur est entraîné en rotation par ledit moteur et est plongé dans la composition liquide,
- un aérateur (4) centrifuge de surface est entraîné en rotation par ledit arbre moteur dans un premier sens de rotation, ledit aérateur étant adapté pour présenter une efficacité maximale d'entraînement de la composition liquide dans ledit premier sens de rotation dudit arbre moteur,
- un mélangeur (8) de fond est entraîné en rotation par ledit arbre moteur,
- on commande, via une unité de commande dudit moteur, l'entraînement de l'arbre (6) moteur dans un second sens de rotation, inverse dudit premier sens de rotation,
**caractérisé en ce que**, dans le second sens de rotation de l'arbre (6) moteur, l'aérateur (4) est désactivé par un dispositif d'activation/désactivation de l'aérateur de façon à ce que l'aérateur (4) ne soit pas entraîné en rotation par l'arbre (6) moteur, afin de le rendre inopérant sur la composition liquide dans le second sens de rotation.

11. Procédé selon la revendication 10 **caractérisé en ce que**, dans le premier sens de rotation, l'aérateur (4) et le mélangeur (8) sont entrainés en rotation par l'arbre (6) et permettent la formation d'un flux ascendant de composition liquide du mélangeur (8) vers l'aérateur (4).

12. Procédé selon l'une des revendications 10 ou 11 **caractérisé en ce que**, dans le second sens de rotation, l'aérateur (4) est rendu inopérant et le mélangeur (8) est entrainé en rotation par ledit arbre moteur, le mélangeur permettant la formation d'un flux descendant de composition liquide de la surface du liquide vers le mélangeur (8).

## Patentansprüche

1. Gerät zur mechanischen Behandlung einer flüssigen Zusammensetzung in einem Becken, umfassend:
- ein Gestell (2), das den Motor außerhalb der flüssigen Zusammensetzung hält,
- eine Motorwelle (6), die durch den besagten Motor in Rotation versetzt wird, und in die flüssige Zusammensetzung eintaucht,
- einen Oberflächen-Zentrifugallüfter (4), der von der besagten Motorwelle in eine erste Drehrichtung der besagten Motorwelle in Rotation versetzt wird, und dazu geeignet ist, eine maximale Antriebseffizienz der flüssigen Zusammensetzung in die besagte erste Drehrichtung der besagten Motorwelle zu bewirken,
- einen Bodenmischer (8), der von der besagten Motorwelle in Rotation versetzt wird, wobei:
- der Motor (2) in eine zweite Drehrichtung angetrieben werden kann, die umgekehrt zur ersten Drehrichtung verläuft,
- das Gerät eine Steuereinheit des besagten Motors umfasst, die dazu geeignet ist, um den Antrieb der Motorwelle (6) in die zweite Drehrichtung ansteuern zu können,
**dadurch gekennzeichnet, dass** das Gerät eine Vorrichtung zum Ein-/ Ausschalten des Lüfters umfasst, die dazu geeignet ist, um den Lüfter in der zweiten Drehrichtung der Motorwelle (6) auszuschalten, sodass er von der Motorwelle (6) nicht angetrieben wird, um ihn in der zweiten Drehrichtung in der flüssigen Zusammensetzung unwirksam zu machen.

2. Gerät nach Anspruch 1, **dadurch gekennzeichnet, dass** der Lüfter (4) eine im Allgemeinen konische Form aufweist, und darauf zentrifugale Schaufeln befestigt sind, die sich schräg von der Spitze bis zur Basis des besagten Konus erstrecken.

3. Gerät nach einem der Ansprüche 1 oder 2, **dadurch gekennzeichnet, dass** die Position des Lüfters im Verhältnis zum Niveau der flüssigen Zusammensetzung in der ersten und in der zweiten Drehrichtung identisch ist.

4. Gerät nach einem der Ansprüche 1 bis 3, **dadurch gekennzeichnet, dass** es eine einseitig gerichtete Drehantriebsvorrichtung, die Freilauf genannt wird, umfasst, die dazu geeignet ist, um den Rotationsantrieb des Lüfters durch die Motorwelle (6) in eine erste Drehrichtung zu ermöglichen, und zum Auskoppeln der Motorwelle (6) und des Lüfters (4) in der zweiten Drehrichtung der Motorwelle, in der der Lüfter (4) von der Motorwelle nicht in Rotation versetzt wird.

5. Gerät nach einem der Ansprüche 1 bis 4, **dadurch gekennzeichnet, dass** der Mischer (8) aus einem axialen Rotor gebildet wird.

6. Gerät nach einem der Ansprüche 1 bis 5, **dadurch gekennzeichnet, dass** es einen Führungskanal (16) umfasst, der aus einem Drehzylinderabschnitt gebildet wird, und zwischen dem Mischer und dem Lüfter angeordnet ist, sodass die Motorwellenachse und die Drehachse des Drehzylinderabschnitts gleich sind.

7. Gerät nach einem der Ansprüche 1 bis 6, **dadurch gekennzeichnet, dass** die Motorwelle senkrecht angeordnet ist.

8. Gerät nach einem der Ansprüche 1 bis 7, **dadurch gekennzeichnet, dass** die Rotationsachse des Lüfters (4) und die Rotationsachse des Mischers (8) parallel zur Motorwelle liegen.

9. Gerät nach einem der Ansprüche 1 bis 8, **dadurch gekennzeichnet, dass** das Gestell Stützen (18) umfasst, die auf dem Beckengrund aufliegen.

10. Mechanisches Behandlungsverfahren einer flüssigen Zusammensetzung in einem Becken, bei dem:
- ein Motor (2) von einem Gestell außerhalb der flüssigen Zusammensetzung gehalten wird,
- eine Motorwelle (6) von dem besagten Motor in Rotation versetzt, und in die flüssige Zusammensetzung getaucht wird,
- ein Oberflächen-Zentrifugallüfter (4) von der besagten Motorwelle in eine erste Drehrichtung der besagten Motorwelle in Rotation versetzt wird, und der besagte Lüfter dazu geeignet ist, eine maximale Antriebseffizienz der flüssigen Zusammensetzung in die besagte erste Drehrichtung der besagten Motorwelle zu bewirken,
- ein Bodenmischer (8) von der besagten Motorwelle in Rotation versetzt wird,
- man über eine Steuereinheit des besagten Motors den Antrieb der Motorwelle (6) in eine zweite Drehrichtung ansteuert, die umgekehrt zur ersten Drehrichtung verläuft,
**dadurch gekennzeichnet, dass** der Lüfter (4) bei der zweiten Drehrichtung der Motorwelle (6) durch eine Vorrichtung zum Ein-/ Ausschalten des Lüfters ausgeschaltet wird, sodass der Lüfter (4) von der Motorwelle (6) nicht angetrieben wird, um ihn in der zweiten Drehrichtung in der flüssigen Zusammensetzung unwirksam zu machen.

11. Verfahren nach Anspruch 10, **dadurch gekennzeichnet, dass** der Lüfter (4) und der Mischer (8) in der ersten Drehrichtung durch die Welle (6) in Rotation versetzt werden, und die Bildung eines ansteigenden Stromes der flüssigen Zusammensetzung vom Mischer (8) zum Lüfter (4) ermöglicht wird.

12. Verfahren nach einem der Ansprüche 10 oder 11, **dadurch gekennzeichnet, dass** der Lüfter (4) in der zweiten Drehrichtung unwirksam ist, und der Mischer (8) von der besagten Motorwelle in Rotation versetzt wird, wobei der Mischer die Bildung eines absteigenden Stromes der flüssigen Zusammensetzung von der Oberfläche der Flüssigkeit zum Mischer (8) ermöglicht wird.

## Claims

1. Apparatus for mechanically treating a liquid composition contained in a tank, comprising:
- a frame which supports a motor (2) out of the liquid composition,
- a drive shaft (6) which is rotatably driven by said motor and which is immersed in the liquid composition,
- a centrifugal surface aerator (4) which is rotatably driven by said drive shaft in a first direction of rotation of said drive shaft and which is adapted to have a maximum efficiency for driving the liquid composition in said first direction of rotation of said drive shaft,
- a bottom mixer (8), which is rotatably driven by said drive shaft, in which:
- the motor (2) can be driven in a second direction of rotation, counter to said first direction of rotation,
- the apparatus comprises a unit for controlling said motor, which unit is adapted to be able to control the driving of the drive shaft (6) in the second direction of rotation,
**characterised in that** the apparatus comprises a device for activation/deactivation of the aerator, which device is adapted to deactivate the aerator in the second direction of rotation of the drive shaft (6) so that it is not rotatably driven by the drive shaft (6), in order to render it inoperative on the liquid composition in the second direction of rotation.

2. Apparatus according to Claim 1, **characterised in that** the aerator (4) is generally in the form of a cone to which there are fixed centrifugal blades which extend in an oblique manner from the vertex to the base of the said cone.

3. Apparatus according to one of Claims 1 or 2, **characterised in that** the position of the aerator relative to the level of the liquid composition is identical in the first direction of rotation and in the second direction of rotation.

4. Apparatus according to one of Claims 1 to 3, **characterised in that** it comprises a unidirectional rotary transmission device, called a free wheel, which is adapted to allow the aerator to be rotatably driven by the drive shaft (6) in the first direction of rotation, and to disengage the drive shaft (6) and the aerator (4) in the second direction of rotation of the drive shaft, for which the aerator (4) is not rotatably driven by the drive shaft.

5. Apparatus according to one of Claims 1 to 4, **characterised in that** the mixer (8) is formed by an axial propeller.

6. Apparatus according to one of Claims 1 to 5, **characterised in that** it comprises a guide conduit (16) which is formed by a cylindrical portion generated by revolution and which is arranged between the mixer and the aerator, so that the axis of the drive shaft coincides with the axis of revolution of the cylindrical portion.

7. Apparatus according to one of Claims 1 to 6, **characterised in that** the drive shaft is arranged vertically.

8. Apparatus according to one of Claims 1 to 7, **characterised in that** the axis of rotation of the aerator (4) and the axis of rotation of the mixer (8) are parallel to the drive shaft.

9. Apparatus according to one of Claims 1 to 8, **characterised in that** the frame comprises pillars (18) which rest on the bottom of the tank.

10. Method for mechanically treating a liquid composition contained in a tank, in which:
- a motor (2) is supported out of the liquid composition by a frame,
- a drive shaft (6) is rotatably driven by said motor and is immersed in the liquid composition,
- a centrifugal surface aerator (4) is rotatably driven by said drive shaft in a first direction of rotation, said aerator being adapted to have maximum efficiency for driving the liquid composition in said first direction of rotation of said drive shaft,
- a bottom mixer (8) is rotatably driven by said drive shaft,
- the driving of the drive shaft (6) in a second direction of rotation, counter to said first direction of rotation, is controlled via a unit for controlling said motor, **characterised in that**, in the second direction of rotation of the drive shaft (6), the aerator (4) is deactivated by a device for activation/deactivation of the aerator so that the aerator (4) is not rotatably driven by the drive shaft (6), in order to render it inoperative on the liquid composition in the second direction of rotation.

11. Method according to Claim 10, **characterised in that**, in the first direction of rotation, the aerator (4) and the mixer (8) are rotatably driven by the shaft (6) and allow the formation of an ascending flow of liquid composition from the mixer (8) towards the aerator (4).

12. Method according to one of Claims 10 or 11, **characterised in that**, in the second direction of rotation, the aerator (4) is rendered inoperative and the mixer (8) is rotatably driven by said drive shaft, the mixer allowing the formation of a descending flow of liquid composition from the surface of the liquid towards the mixer (8).
